# EUROPEAN PATENT SPECIFICATION

(11) **EP 3 093 122 B1**
(45) Date of publication and mention of the grant of the patent: **03.04.2019**
(21) Application number: 16155910.9
(22) Date of filing: 16.02.2016
(51) Int. Cl.: B29C 67/00, B33Y 10/00, B33Y 80/00, B29D 22/00

(54) **APPARATUS AND METHOD FOR ADDITIVE MANUFACTURING OF FLUIDIC DEVICES WITH IMPROVED SEALING PROPERTIES**
VORRICHTUNG UND VERFAHREN ZUR ADDITIVEN HERSTELLUNG VON STRÖMUNGSELEMENTEN MIT VERBESSERTER DICHTHEIT
DISPOSITIF ET PROCÉDÉ DE FABRICATION ADDITIVE DE DISPOSITIFS D'ÉCOULEMENT AVEC ÉTANCHÉITÉ AMELIORÉE

(30) Priority: 23.04.2015 GB 201506943
(43) Date of publication of application: 16.11.2016
(73) Proprietor: Blacktrace Holdings Limited, Hertfordshire SG8 5TW (GB)
(72) Inventor: Gilligan, Mark, Royston, Hertfordshire SG8 5DS (GB); Delport, Jean-Paul, Bury St Edmunds, Suffolk IP33 3AS (GB); Chen, Xian, Royston, Hertfordshire SG8 9HZ (GB); Whiteley, Tom, Royston, Hertfordshire SG8 5LU (GB); Lovatt, Andrew, Cambridge, Cambridgeshire CB23 1HR (GB)
(74) Representative: Boult Wade Tennant LLP

(56) References cited:
- US-A- 5 900 207
- US-A1- 2011 070 394
- US-B1- 6 722 872
- JIN YU-AN ET AL: "A parallel-based path generation method for fused deposition modeling", INTERNATIONAL JOURNAL OF ADVANCED MANUFACTURING TECHNOLOGY, SPRINGER VERLAG, LONDON; GB, vol. 77, no. 5, 29 October 2014 (2014-10-29), pages 927-937, XP035459175, ISSN: 0268-3768, DOI: 10.1007/S00170-014-6530-Z [retrieved on 2014-10-29]

## Description

### BACKGROUND OF THE INVENTION

The present invention relates to an apparatus and method for creating a fluidic device and a corresponding device according to claims 1, 6 and 7.

Fused deposition modelling (FDM) is an additive manufacturing technology commonly used for modelling, prototyping, and production applications. Additive manufacturing is also referred to as 3D - printing.

FDM begins with a software process which processes a 3D CAD file, mathematically orienting and slicing the model for the build process. The next step is to take the sliced model and create tool paths and build process that builds a part with the desired properties. The model or part is produced by extruding a small bead of material along the tool path to form layers as the material hardens immediately after extrusion from the nozzle. Typically FDM machines include a plastic filament or metal wire which is unwound from a coil and is fed to an extrusion nozzle via drive rollers (or similar) at a controlled rate. Filament is not always used and in some instances beads or pellets are fed into the nozzle. The material is heated inside the nozzle to a semiliquid state and is then extruded through the exit of the nozzle and deposited onto the part.

The nozzle can be moved in both horizontal and vertical directions by a numerically controlled mechanism. The nozzle follows a tool-path controlled by a computer-aided manufacturing (CAM) software package, and the part is built from the bottom up, one layer at a time.

One of the limitations of building up the material one layer at a time is that it is not possible to produce features which are unsupported by material on the previous layer. This means that is it not possible to have large overhangs of material, although small overhangs with limited slope are possible.

US 5,121,329 describes in more detail the principles behind FDM.

Previous attempts to fabricate fluidic devices using FDM have had limited success. This is because the beads of material extruded and deposited by a FDM nozzle typically have a circular or near circular cross section and this results in gaps between neighbouring bead deposits in the device. These gaps form leak paths and when a fluid is pumped into the device a significant amount of the fluid will fill these gaps and leak out of the device. This disclosure resolves the issue of leak paths and enables the manufacture of sealed fluidic devices.

FDM has the potential to provide significant benefits for the manufacture of fluidic devices, including the potential to fabricate devices in a wide range of materials, primarily polymers. This is potentially extremely useful in the research, development and manufacture of fluidic devices. One example is the development of devices for point of care diagnostic testing. In this area of R&D it would be very useful to manufacture a broad range of fluid features including fluidic channels, channel networks, fluid reservoirs, fluid splitting junctions, fluid merging junctions, passive mixer structures, fluid connection ports, valve geometries, and flow cells. It would also be useful to change the material that the device is fabricated from.

Many commercially available FDM machines use ABS polymer, however it has been found that it is possible to use a wide range of polymers including polypropylene, cyclic olefin copolymer (COC), polycarbonate, polystyrene, as examples. Being able to quickly manufacture in different materials is particularly useful in diagnostic or biological applications where there can be complex interactions between the fluids and the wetted surfaces. For example protein binding to polymer surfaces can be undesirable for the analysis biological samples. By trying different build polymers it would be possible to find a material that has low binding properties for a particular protein. In addition different polymers have different chemical resistance, optical, thermal and mechanical properties which again can be optimised by changing the build material.

A specific example of such a device is a sensor for measuring glucose levels in a patient's blood stream. The device would typically include a port for injection of a blood sample, a fluidic channel where dried electrolytes are dissolved into the blood sample and an interface to the electrochemical sensor, which allows the sample to be brought into contact with the sensor. The final device may include some extra components such as gaskets and adhesive layers but the basic fluid structure would be fabricated using FDM. Once a suitable material and geometry has been found for the fluidic structure it would be possible to manufacture devices in medium volume by FDM.

This disclosure is primarily focused on fluidic devices with features as described with a scale range from microfluidic channels with features sizes of 10µm-1mm (more typically 50µm-1mm) up to millimetre (milli-fluidic) scale devices with features sizes in the 1mm-100mm range. It is possible to also conceive of larger fluidic devices in the >100mm range, for example pipework and vessels for chemical and biological reactors.

Traditional prototyping methods for fluidic devices have various drawbacks. For example stereolithography is limited to a narrow range of photo curable materials and there are also limitations around the length and cross sections of fluid channels that can be fabricated. In addition stereolithography suffers from slow build times which result in high manufacturing costs. Fluidic devices are often fabricated by CNC milling a channel network and then capping the channels with a sealing layer. The main disadvantage of this approach is that attaching the sealing layer is not a straightforward process and sealing processes such as laser welding often place limitations on the materials that can be used and the geometries that can be achieved.

### SUMMARY OF THE INVENTION

According to a first aspect of the present invention there is provided an apparatus according to claim 1.

The predetermined commands from the controller may include instructing the apparatus to:
dispense a closed loop of material forming a portion of the perimeter wall of a fluid channel in the fluidic device in at least one of the layers of material, wherein the two ends of the closed loop of material overlap.

The predetermined commands from the controller may include instructing the apparatus to dispense:
a first line deposit of material having a first pitch forming a first portion of a perimeter wall of a fluid channel in the fluidic device in at least one of the layers of material; and
a second line deposit of material, which is located in the layer sequential to the layer containing the first line deposit, onto the line first deposit forming a second portion of the perimeter wall of the fluid channel in the fluidic device;
wherein the second line deposit of material is laterally offset from the first line deposit of material, and overhangs into the fluid channel.

The predetermined commands from the controller may include instructing the apparatus to dispense:
a first line deposit of material forming a portion of a perimeter wall of a first transverse fluid channel in the fluidic device in at least one of the multiple layers of material; and
a second line deposit of material which neighbours the first deposit of material in the at least one of the multiple layers of material, and which forms a portion of a perimeter wall of a second fluid channel in fluid communication with, and substantially perpendicular to, the first transverse fluid channel; and
wherein the first line deposit and the second line deposit overlap at the interface of the first and second line deposits of material.

The predetermined commands from the controller may include instructing the apparatus to dispense:
a first line deposit of material forming a side wall of a fluid channel in the fluidic device in at least one of the multiple layers of material;
a second line deposit of material, which is located in the layer sequential to the layer containing the first deposit, onto the first deposit forming a top wall of the fluid channel in the fluidic device, wherein the second line deposit of material extends transversely across the width of the fluid channel;
a third line deposit of material, which is located in the same layer as the layer containing the second line deposit of material, wherein the third line deposit of material is adjacent to the second line deposit of material; and
a fourth line deposit of material, which is located in the layer sequential to the layer containing the second and third deposits, onto the top wall;
wherein the first, third and fourth deposits extend in a direction parallel to the length of the fluid channel.

An embodiment also described in the application, is an apparatus for creating a three dimensional device, the apparatus comprising:
a dispensing head comprising a passage for receiving a supply of material, and comprising a dispensing orifice having a central axis at one end of the passage;
a base member for receiving the material dispensed from the orifice of the dispensing head;
an actuator means for moving the dispensing head relative to the base member; and
a controller for sending a set of predetermined commands based on pattern data derived from the required structure of the three dimensional device to each of the actuator means and the dispensing head;
wherein the apparatus is operable to create the device by depositing a series of sequential layers of material from the dispensing head onto the base member, each layer formed of a series of adjacent line deposits of material, based on the predetermined commands sent by the controller to the actuator means and the dispensing head,
wherein, for a line deposit of material in a region where the pattern data requires an abrupt change of direction of the line deposit, the controller is operable to instruct the apparatus to move the dispensing head in this region along an arcuate path.

The controller may be operable to move the central axis of the dispensing orifice along the arcuate path.

The arcuate path may have a radius of curvature of between 10%-200% of the maximum width of the line deposit. In some embodiments, the lower end of the above percentage range may represent a larger percentage, and may be 20%, 25%, 30%, 40% or 50%. The upper end of this percentage range may represent a smaller percentage, and may be 180%, 150%, 120% or 100%.

The arcuate path may have a radius of curvature of between 20%-400% of the maximum depth of the line deposit. In some embodiments, the lower end of the above percentage range may represent a larger percentage, and may be 25%, 30%, 40% or 50%. The upper end of this percentage range may represent a smaller percentage and may be 350%, 300%, 250%, 200%, 150% or 100%.

The arcuate path may have a radius of curvature of between 0.1mm-0.4mm.

The first aspect of the present invention also provides a method according to claim 6.

An embodiment also described in the application, is a method for creating a three dimensional device using an apparatus comprising:
a dispensing head comprising a passage for receiving a supply of material, and comprising a dispensing orifice having a central axis at one end of the passage;
a base member for receiving the material dispensed from the orifice of the dispensing head;
an actuator means for moving the dispensing head relative to the base member; and
a controller for sending a set of predetermined commands to each of the actuator means and the dispensing head based on pattern data derived from the required structure of the three dimensional device;
wherein the method comprises depositing a series of sequential layers of material from the dispensing head onto the base member, each layer formed of a series of adjacent line deposits of material, based on the predetermined commands sent by the controller to the actuator means and the dispensing head,
wherein the method also comprises, for a line deposit of material in a region where the pattern data requires an abrupt change of direction of the line deposit, moving the dispensing head in this region along an arcuate path.

### BRIEF DESCRIPTION OF THE FIGURES

The disclosure will now be described with reference to the accompanying Figures in which:
Figure 1 shows a perspective view of a machine for fused deposition modelling.
Figure 2A shows a plan view of a microfluidic device created using the machine of Figure 1;
Figure 2B shows a right end view of the microfluidic device shown in Figure 2A; and
Figure 2C shows a bottom end view of the microfluidic device shown in Figure 2A.
Figure 3 shows an exploded view of various slices of the device shown in Figures 2A-2C. For each slice, a plan view is also shown in the Figure.
Figures 4A and 4B each shows a dispensing path of a prior art tool path for creating a closed loop of material for a fluid channel;
Figures 4C-4E each shows a dispensing path of a different tool path for creating a closed loop of material for a fluid channel;
Figure 4F shows a section view of the closed loop of material of Figure 4A; and
Figure 4G shows a section view of the closed loop of material of Figures 4C-4E.
Figure 5A shows a cross-section view of a portion of the device shown in Figures 2A-2C. Figure 5A also shows plan views of the layers shown in the cross-section view; and
Figure 5B shows a cross-section view of an alternative design to the design shown in Figure 5A.
Figure 6A shows a plan view of a slice of the device shown in Figures 2A-2C;
Figure 6B shows a plan view of a neighbouring slice to the slice shown in Figure 6A;
Figure 6C shows a plan view of the dotted region of the slice shown in Figure 6B;
Figure 6D shows a first section view of the dotted region of the device shown in Figure 6B; and
Figure 6E shows a second section view of the dotted region of the device shown in Figure 6B.
Figure 7A shows a photograph of a deposit created by a tool following a first vector path; and
Figure 7B shows a photograph of a deposit created by a tool following a second vector path.

### DETAILED DESCRIPTION

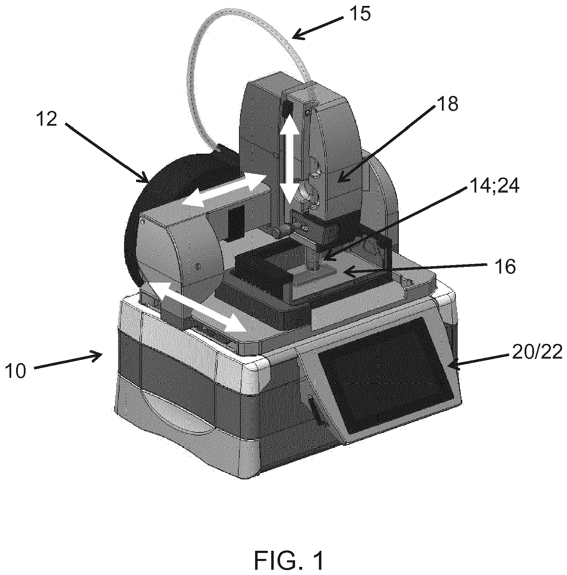

With reference to Figure 1, there is shown a FDM machine 10. The machine comprises a reel of material 12 which is fed into a robotic head 14 via a flexible tube 15. Material from the head 14 is dispensed onto a base member 16 of the machine 10.

A heater is located in the robotic head 14 for heating the material passing through the head beyond the material's glass transition temperature prior to it being dispensed.

The robotic head 14 can move relative to the base member 16 along a three dimensional Cartesian coordinate system. Movement of the robotic head 14 is controlled by an actuator means 18 located on the machine 10.

The base member 16 is preferably in the form of a flat plate and acts as the base plate onto which heated material dispensed from the robotic head 14 is deposited.

A controller 20 is located on the machine which controls the operation of the head 14 and the actuator means 18. A user interface 22 is connected to the controller to allow user control of the machine 10.

To make the machine 10 suitable for creating fluidic devices, the robotic head 14 comprises a dispensing orifice 24 through which material is dispensed which has a variable diameter of between 0.1mm - 1.0mm.

Smaller diameters than this may be used depending on the size of the smallest features from the fluidic device being manufactured.

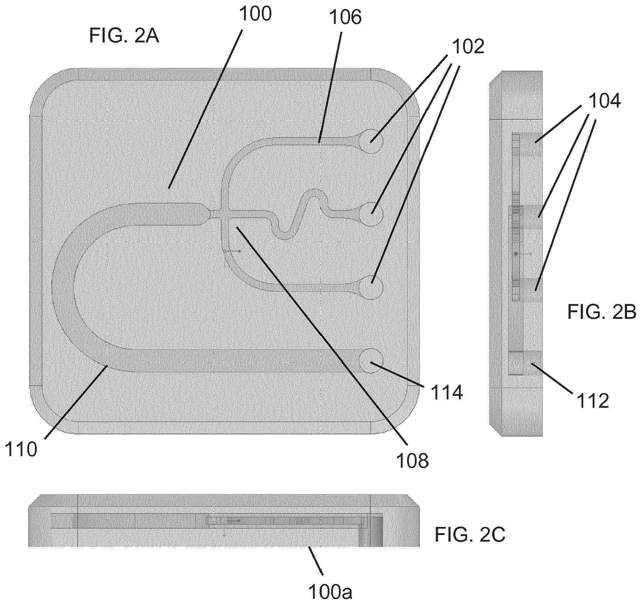

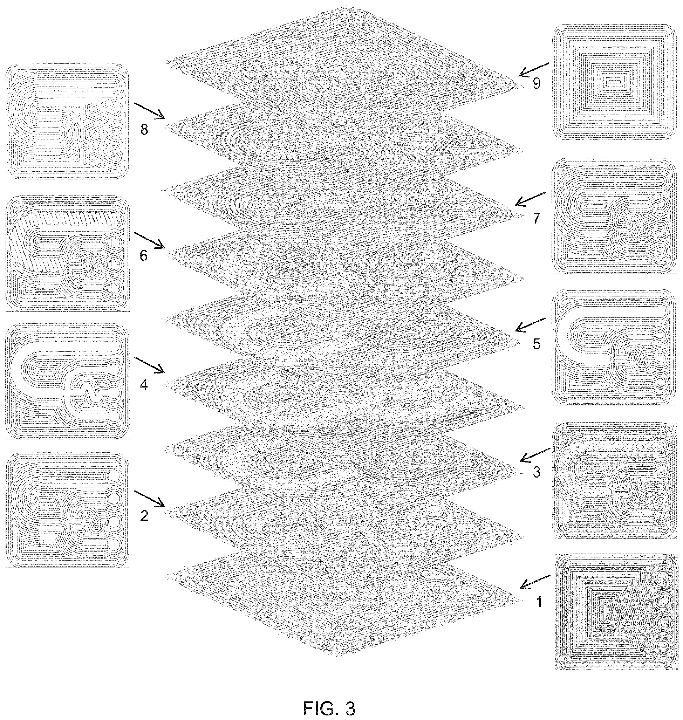

An example of a microfluidic device created using the apparatus shown in Figure 1 is shown in Figures 2A-2C and Figure 3. The device shown in these Figures comprises a block 100 of material in which are located three fluid inlet ports 102. Each fluid inlet port 102 defines a vertical channel 104 which extends from the bottom surface 100a of the block up into the thickness of the block 100. Each vertical channel 104 is fluidly connected to a respective horizontal fluid channel 106. The three horizontal channels 106 extend through a portion of the thickness of the block 100 and meet at a mixing point 108. An outlet fluid channel 110 radiates from the mixing point 108 and extends through the block where it terminates at an exit channel 112. The exit channel 112 extends vertically through the thickness of the block to a fluid outlet port 114 located on the bottom surface 100a of the block 100.

Block 100 is created by sequentially depositing multiple layers of material from the dispensing head 14 onto the base member 16 based on predetermined commands sent by the controller to the actuator means and the dispensing head. In each layer, as shown in Figure 3, the head 14 is moved across the base member 16 and material is deposited from the head 14 to create a series of linear deposits 200 of material which together define the features of the microfluidic device in that layer.

The device shown in Figure 3 is approximately 16mm long; 15mm wide; and 2mm thick. Each inlet port 102 has a diameter of approximately 1000µm, and each of the three horizontal channels 106 has an inner diameter of approximately 400µm wide x 200pm deep.

In light of the micro-size of these channels, there is the possibility of leakage between each of the linear deposits deposited by the head 14.

To minimise the extent of such leakage, the predetermined commands issued by the controller are carefully controlled.

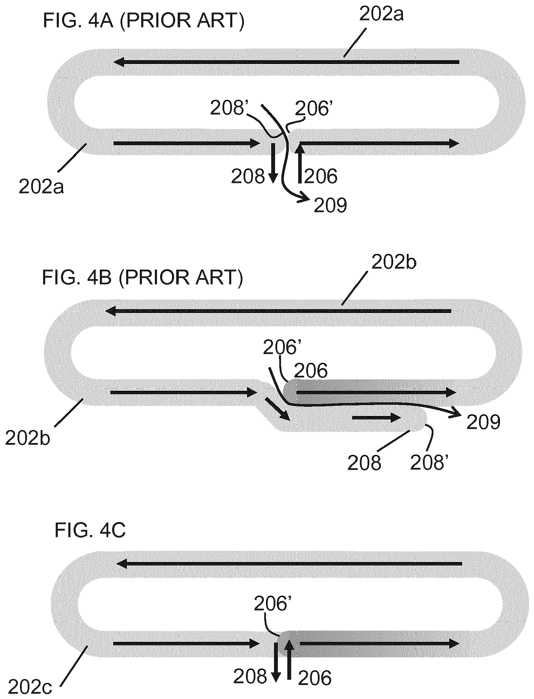

The apparatus is configured to minimise leakage between each of the linear deposits 200 deposited by the head 14 as shown in Figures 4C-4E. In Figures 4A-4E, there are shown closed loops of material 202a-202e which each form a portion of the perimeter wall of a fluid channel in the microfluidic device.

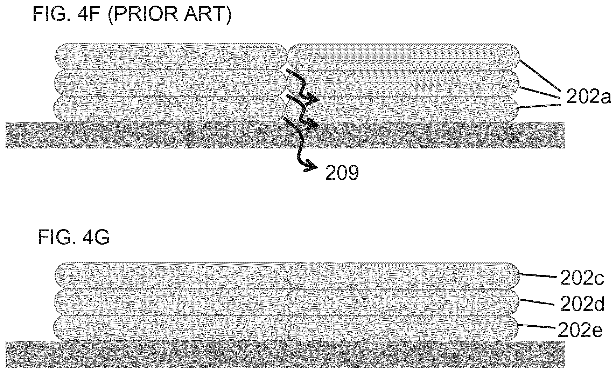

In the prior art operation of Figure 4A, the material 202a is deposited from a beginning position 206 with a curved end 206' and around in a loop to an end position 208 with a curved end 208' which abuts the curved end 206' of the beginning position 206. In this way, no overlap of material is created in the deposited layer in the space between the curved ends 206';208' of the beginning and end positions 206;208. Due to the slight separation between the curved ends 206';208' of the beginning and end positions 206;208, a leakage path 209 is created which allows fluid to escape between these two portions of the deposited loop of material 202a. A section view of the closed loop of material 202a, and leakage path 209, is shown in Figure 4F.

In Figure 4B, which also shows a prior art operation, once the head 14 reaches the end position 208, the head 14 continues to deposit the layer around the outside of the closed loop of material 202b. In this operation, the curved ends 206';208' also do not overlap and a leakage path 209 is still present as shown in Figure 4B between the sides of the beginning and end positions 206;208 which allows fluid to escape from the closed loop of material 202b.

In Figure 4C, the material 202c is also deposited from a beginning position 206 and around in a loop to an end position 208. However, in this operation, the curved end 206' of the beginning position 206 is located beyond the curved end 208' of the end position 208 such that there is an overlap of material deposited in the vicinity of these two positions 206;208 which prevents the leakage path as present in Figures 4A and 4B from forming. Due to the overlap of the two curved ends 206';208', to prevent an excess of material building up, the deposited material dispensed from the dispensing head in the beginning and end portions of the closed loop of material 202b is carefully controlled so that the total thickness of the layer is uniform. The control of the dispensed deposited material can be achieved by varying the velocity of the dispensing head, or by changing the feed rate of material to the dispensing head 14, in this area.

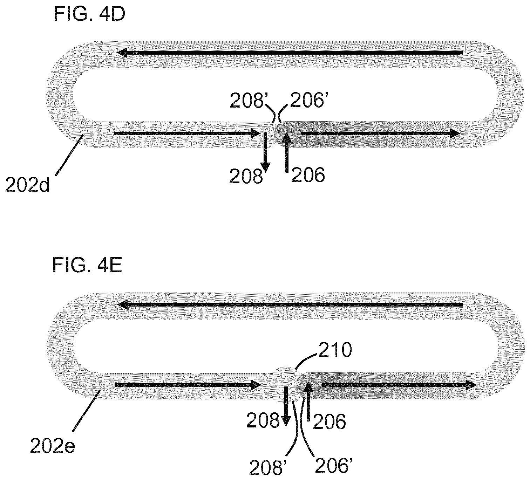

Figure 4D shows a similar tool path to Figure 4C except that the curved end 208' of the end position 208 does not extend as far beyond the curved end 206' of the beginning position 206.

In the operation as shown in Figure 4E, material is also deposited from a beginning position 206 and around in a loop to an end position 208. In this operation however, the beginning position 206 is located just short of the end position 208. To prevent leakage in this operation, additional material 210 is deposited at the beginning and/or end position 208 which flows to bridge the gap between the beginning and end positions 206;208 to thereby create an overlap of the curved ends 206';208' of the two positions 206;208 to prevent the leakage path 209. In this operation, the overlap can be created by decreasing the velocity of the dispensing head, or by increasing the feed rate of material to the dispensing head 14, in the beginning and/or end positions 206;208 to ensure sufficient material flows to bridge the gap.

A section view of the closed loops of material 202c-202e from Figures 4C-4E, which do not contain the leakage path 209, is shown in Figure 4G.

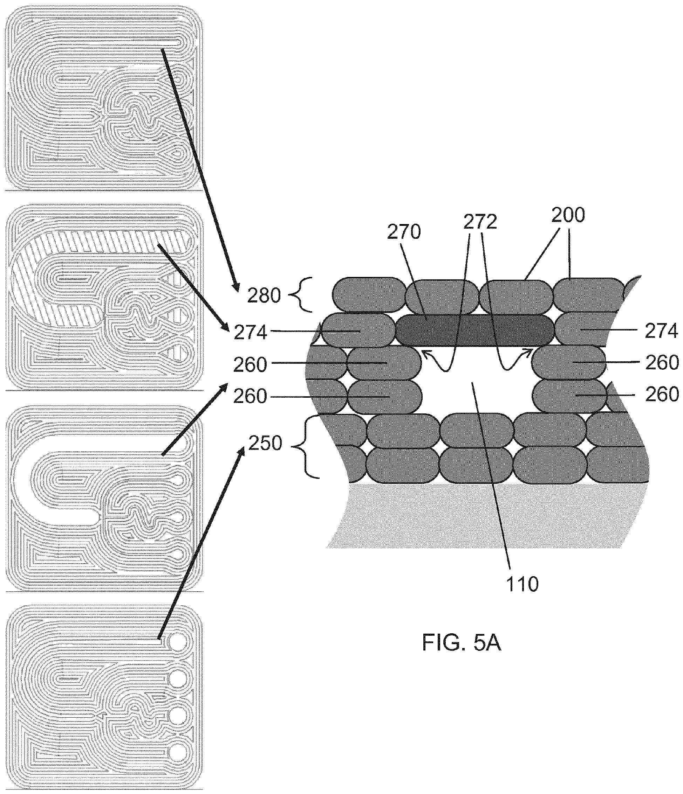

Another improvement for reducing leakage in microfluidic devices created using FDM is shown in Figure 5A. The cross-section view of Figure 5A is taken through a section of the outlet fluid channel 110. The outlet fluid channel 110 is formed of a series of linear deposits 200. The bottom of the channel 110 is formed of a series of parallel deposits 250 which are largely parallel to the direction of fluid flow along the fluid channel 110 when the channel is in use. The side wall of the channel 110 is formed of another series of deposits 260 which are largely parallel to the deposits 250 making up the bottom of the channel 110. The top surface of the channel is created by a deposit 270 which snakes in an alternating fashion as a series of abutting line portions which extend across the topmost deposit from the parallel deposits 260. Deposits 274 which are largely parallel to the deposits 250;260 are located on both sides of the snaking deposit 270.

To support the snaking deposit 270 as much as possible, the snaking deposit 270 extends along the width, and at an angle to rather than along the length, of the channel 110. In this way, the snaking deposit 270 is located at a different orientation to each of the deposits 250;260 making up the bottom and sides of the channel 110.

At the interface 272 of the topmost side deposit 260 and the snaking deposit 270, which are located at different orientations, there is a potential leak path due to the mismatch in layer orientations.

Conventionally, layers above the snaking deposit 270 would be deposited in a similar orientation/pattern to the snaking layer 270. However, Figure 5A shows an improved configuration with reduced leakage whereby the layers 280 above the snaking deposit 270 are deposited in a similar orientation to the deposits 250;260 making up the bottom and sides of the channel 110, and also deposits 274.

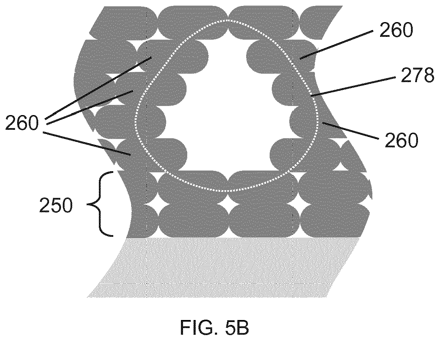

An alternative to using a snaking deposit 270 as the top surface of the channel is shown in Figure 5B. As shown in this Figure, some of the deposits 260 making up the sidewall of the channel 110 each partially overhang the deposit 260 on which it is deposited. The degree by which each of these deposits 260 overhangs depend on numerous factors, such as the rate of deposition of material, and also the properties of the material being deposited. In Figure 5B, each of the overhanging deposits 260 overhangs by approximately 30% of their width. The overhang percentage may be more than this however, for instance 50%. By overhanging the deposits in this way, the top of the channel 110 can be created without the need for a snaking deposit 270.

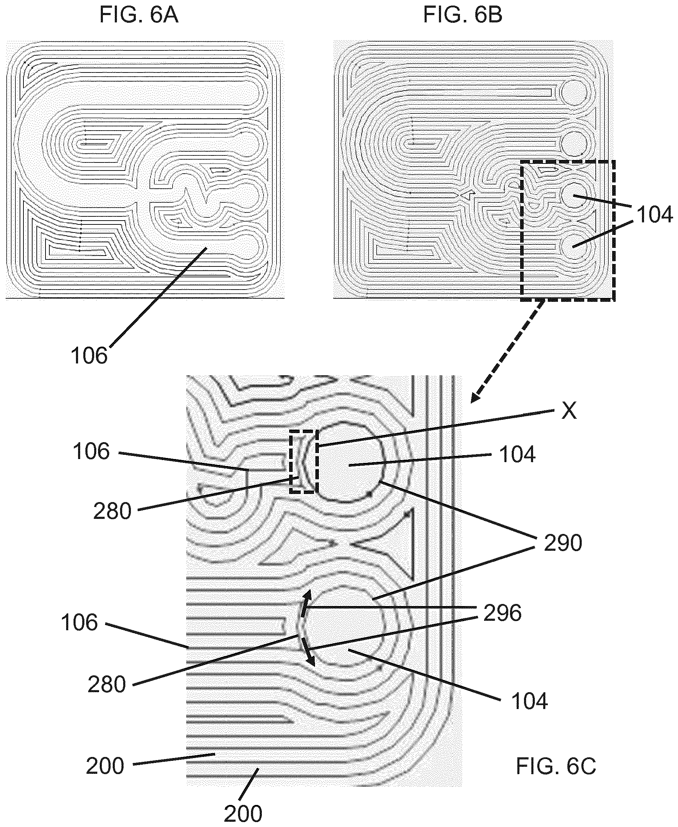

Another improvement for reducing leakage between a horizontal channel and a vertical channel in microfluidic devices created using FDM is shown in Figures 6A-6E. These Figures focus on the particular interface between one of the horizontal fluid channels 106 and its respective vertical channel 104 in the device 100.

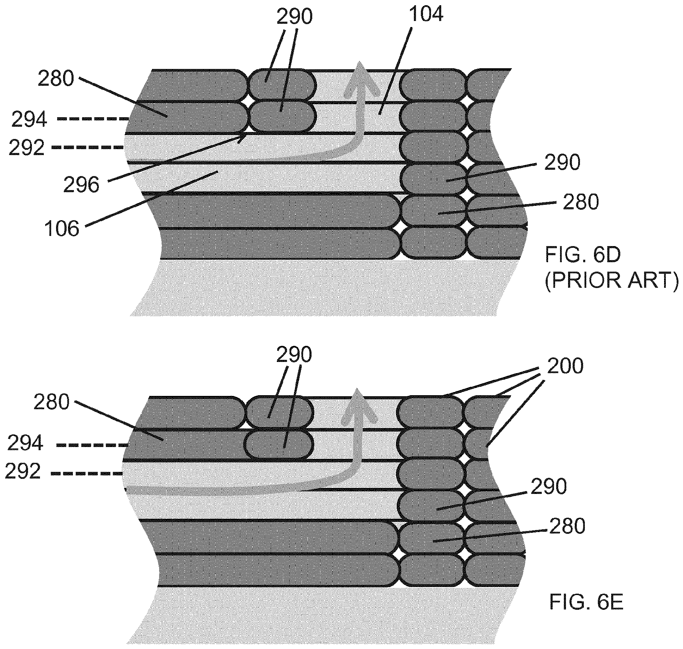

Figures 6D and 6E each shows a section view of a portion of the dotted region of the device shown in Figure 6B. In each of Figures 6D and 6E, there is shown a series of linear deposits 280 defining the base of the horizontal channel 106 and a series of different deposits 290 making up the wall of the vertical channel 104.

The plan view of Figure 6A represents a first deposit layer 292 shown in Figures 6D and 6E, whilst the plan view of Figure 6B represents a second deposit layer 294 (also shown in Figures 6D and 6E) that is adjacent to the first deposit layer 292.

In the second deposit layer 294, in conventional FDM deposition techniques, as shown in Figure 6D, a leak path 296 is created at the interface of the deposits 280;290 making up the respective walls of the horizontal and vertical channels 106;104.

Figure 6E shows an improvement to the prior art deposition technique shown in Figure 6D. In this embodiment, at the interface of the deposits 280;290 making up the respective walls of the horizontal and vertical channels 106;104, the pitch between the deposits 280;290 is reduced such that the two deposits overlap 280;290 along their length to plug the leakage path 296. The overlapping region where the reduction in pitch is present between the two deposits 280;290 is shown in the dotted region X of Figure 6C. The overlap is created using any of the techniques used to create the overlaps described in relation to Figure 4C-4E (the beginning and end positions 206;208 as described in Figures 4C-4E are the interfacing portions of the deposits 280;290 which overlap as shown from Figures 6C and 6E).

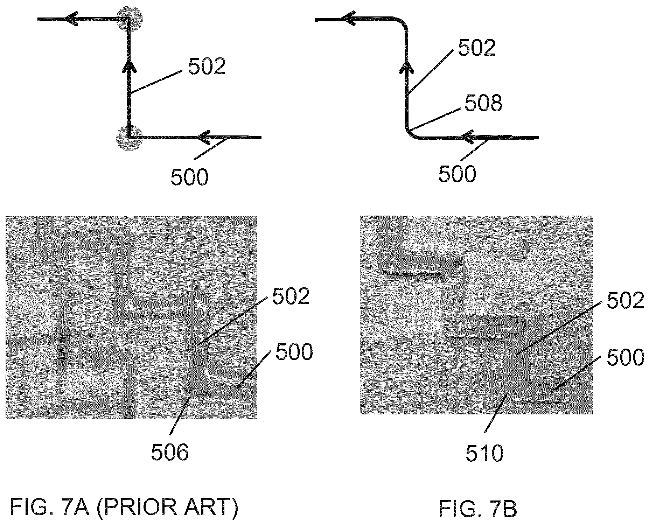

An improvement to creating sharp corners in FDM is shown in Figures 7A and 7B. Conventionally, as shown in Figure 7A, to create a sharp corner using FDM the dispensing head 14 is configured to dispense material along a first vector 500 representative of a first edge of the item being created. Once the head 14 reaches the sharp corner of the item being created, the dispensing head pauses and then moves along a second vector 502 representative of another edge of the item being created.

Due to the sudden change in direction, and pause, of the dispensing head 14 between the two vectors 500;502, an excess of material is dispensed by the head 14 at the corner between these two vectors 502;504, thus resulting in a bulged corner 506 as shown in the photograph of Figure 7A.

To obviate the formation of the bulge 506, the dispensing head 14 is configured to follow an arcuate path 508 between the two vectors 502;504. By dispensing material along this arcuate path, no sudden changes in direction and/or pauses occur between these two vectors. This results in a sharper corner 510 with no bulge as shown in Figure 7B.

The radius of curvature of the arcuate path may be dependent on the height or the width of the deposited material along vectors 502;504. Preferably, the radius of curvature is between 10%-200% of the width or 20%-400% of the depth of the line deposit, though narrower percentage ranges are also possible. The radius of curvature of the arcuate path may alternatively be a fixed amount, for instance between 0.1mm-0.4mm.

In an alternative embodiment, the formation of the bulge 506 is reduced by decreasing the flow rate of material dispensed from the dispensing head in the region of the corner.

Although the above improvements have been described in relation to the particular geometry of microfluidic device shown in the Figures, it will be appreciated that the deposition techniques herein described could be applied to any other device with different geometry.

## Claims

1. An apparatus (10) for creating a three dimensional fluidic device (100) containing at least one fluid channel (110), the apparatus (10) comprising:
a dispensing head (14) comprising a passage for receiving a supply of material, and comprising a dispensing orifice (24) at one end of the passage;
a base member (16) for receiving the material dispensed from the orifice (24) of the dispensing head (14);
an actuator means (18) for moving the dispensing head (14) relative to the base member (16); and
a controller (20) for sending a set of predetermined commands to each of the actuator means (18) and the dispensing head (14);
wherein the apparatus (10) is operable to create the fluidic device by depositing a series of sequential layers of material from the dispensing head (14) onto the base member (16), each layer formed of a series of adjacent line deposits of material, based on the predetermined commands sent by the controller (20) to the actuator means (18) and the dispensing head (14),
wherein the apparatus (10) is operable to overlap the line deposits to reduce leakage paths between the line deposits to improve the sealing properties of the at least one fluid channel (110) in the fluidic device (100);
**characterised by** the predetermined commands from the controller (20) include instructing the apparatus to dispense:
a plurality of deposits of material (250) forming the bottom portion of the perimeter wall of a fluid channel (110) in the fluidic device (100) in at least one of the layers of material;
wherein the plurality of deposits of material (250) are substantially parallel to the direction of fluid flow along the fluid channel (110) when the fluid channel (110) is in use.

2. An apparatus according to claim 1, wherein the predetermined commands from the controller (20) include instructing the apparatus (10) to:
dispense a closed loop of material (202c-202e) forming a portion of the perimeter wall of a fluid channel in the fluidic device (100) in at least one of the layers of material, wherein the two ends (206';208') of the closed loop of material (202c-202e) overlap.

3. An apparatus according to any preceding claim, wherein the predetermined commands from the controller (20) include instructing the apparatus (10) to dispense:
a first line deposit of material (260) having a first pitch forming a first portion of a perimeter wall of a fluid channel (110) in the fluidic device (100) in at least one of the layers of material; and
a second line deposit of material (260), which is located in the layer sequential to the layer containing the first line deposit (260), onto the first line deposit (260) forming a second portion of the perimeter wall of the fluid channel (110) in the fluidic device (100);
wherein the second line deposit of material (260) is laterally offset from the first line deposit of material (260), and overhangs into the fluid channel (110).

4. An apparatus according to any preceding claim, wherein the predetermined commands from the controller (20) include instructing the apparatus (10) to dispense:
a first line deposit of material (280) forming a portion of a perimeter wall of a first transverse fluid channel (106) in the fluidic device (100) in at least one of the multiple layers of material; and
a second line deposit of material (290) which neighbours the first deposit of material (280) in the at least one of the multiple layers of material, and which forms a portion of a perimeter wall of a second fluid channel (104) in fluid communication with, and substantially perpendicular to, the first transverse fluid channel (106); and
wherein the first line deposit (280) and the second line deposit (290) overlap at the interface (296) of the first and second line deposits of material (280;290) .

5. An apparatus according to any preceding claim, wherein the predetermined commands from the controller (20) include instructing the apparatus (10) to dispense:
a first line deposit of material (260) forming a side wall of a fluid channel (110) in the fluidic device (100) in at least one of the multiple layers of material;
a second line deposit of material (270), which is located in the layer sequential to the layer containing the first deposit (260), onto the first deposit (260) forming a top wall of the fluid channel (110) in the fluidic device (100), wherein the second line deposit of material (270) extends transversely across the width of the fluid channel (110);
a third line deposit of material (274), which is located in the same layer as the layer containing the second line deposit of material (270), wherein the third line deposit of material (274) is adjacent to the second line deposit of material (270); and
a fourth line deposit of material (280), which is located in the layer sequential to the layer containing the second and third deposits (270;274), onto the top wall;
wherein the first, third and fourth deposits (260; 274;280) extend in a direction parallel to the length of the fluid channel (110).

6. A method for creating a three dimensional fluidic device (100) containing at least one fluid channel (110) using an apparatus (10) comprising:
a dispensing head (14) comprising a passage for receiving a supply of material, and comprising a dispensing orifice (24) at one end of the passage;
a base member (16) for receiving the material dispensed from the orifice (24) of the dispensing head (14);
an actuator means (18) for moving the dispensing head (14) relative to the base member (16); and
a controller (20) for sending a set of predetermined commands to each of the actuator means (18) and the dispensing head (14);
wherein the method comprises depositing a series of sequential layers of material from the dispensing head (14) onto the base member (16), each layer formed of a series of adjacent line deposits of material, based on the predetermined commands sent by the controller (20) to the actuator means (18) and the dispensing head (14),
wherein the method also comprises overlapping the line deposits to reduce leakage paths between the line deposits to improve the sealing properties of the at least one fluid channel (110) in the fluidic device (100); wherein the method is **characterised by** the apparatus (10) dispensing:
a plurality of deposits of material (250) forming the bottom portion of the perimeter wall of a fluid channel (110) in the fluidic device (100) in at least one of the layers of material;
wherein the plurality of deposits of material (250) are substantially parallel to the direction of fluid flow along the fluid channel (110) when the fluid channel (110) is in use.

7. A three-dimensional fluidic device manufactured using the method according to claim 6.

## Patentansprüche

1. Vorrichtung (10) zur Herstellung einer dreidimensionalen Strömungsvorrichtung (100), die mindestens einen Fluidkanal (110) enthält, wobei die Vorrichtung (10) Folgendes umfasst:
einen Spenderkopf (14), der einen Durchgang zur Aufnahme einer Materialzufuhr und eine Abgabeöffnung (24) an einem Ende des Durchgangs umfasst;
ein Basiselement (16) zum Aufnehmen des aus der Öffnung (24) des Spenderkopfs (14) abgegebenen Materials; ein Betätigungsmittel (18) zum Bewegen des Spenderkopfs (14) in Bezug auf das Basiselement (16); und
eine Steuerung (20) zum Senden eines Satzes von vorbestimmten Befehlen an jedes der Betätigungsmittel (18) und den Spenderkopf (14);
wobei die Vorrichtung (10) betreibbar ist, um die Strömungsvorrichtung durch Abscheiden einer Reihe von aufeinanderfolgenden Materialschichten aus dem Spenderkopf (14) auf das Basiselement (16), wobei jede Schicht aus einer Reihe von nebeneinanderliegenden linienförmigen Materialablagerungen gebildet ist, auf Basis der vorbestimmten Befehlen, die aus der Steuerung (20) an das Betätigungsmittel (18) und den Spenderkopf (14) gesendet werden, zu erzeugen,
wobei die Vorrichtung (10) betreibbar ist, um die Linienablagerungen zu überlappen, um Leckpfade zwischen den linienförmigen Ablagerungen zu reduzieren, um die Dichtungseigenschaften des mindestens einen Fluidkanals (110) in der Strömungsvorrichtung (100) zu verbessern;
**dadurch gekennzeichnet, dass** die vorbestimmten Befehle aus der Steuerung (20) das Anweisen der Vorrichtung zur Abgabe von Folgenden einschließen:
eine Vielzahl von Materialablagerungen (250), die den unteren Abschnitt der Umfangswand eines Fluidkanals (110) in der Strömungsvorrichtung (100) in mindestens einer der Materialschichten bilden;
wobei die Vielzahl von Materialablagerungen (250) im Wesentlichen parallel zur Richtung des Fluidstroms entlang des Fluidkanals (110) ist, wenn der Fluidkanal (110) in Gebrauch ist.

2. Vorrichtung nach Anspruch 1, wobei die vorbestimmten Befehle aus der Steuerung (20) das Anweisen der Vorrichtung (10) zu Folgendem einschließen:
Abgabe einer geschlossenen Materialschleife (202c-202e), die einen Abschnitt der Umfangswand eines Fluidkanals in der Strömungsvorrichtung (100) in mindestens einer der Materialschichten bildet, wobei sich die beiden Enden (206'; 208') der geschlossenen Materialschleife (202c-202e) überlappen.

3. Vorrichtung nach einem vorangehenden Anspruch, wobei die vorbestimmten Befehle aus der Steuerung (20) das Anweisen der Vorrichtung (10) zur Abgabe von Folgendem einschließen:
eine erste linienförmige Materialablagerung (260) mit einer ersten Neigung, die einen ersten Abschnitt einer Umfangswand eines Fluidkanals (110) in der Strömungsvorrichtung (100) in mindestens einer der Materialschichten bildet; und
eine zweite linienförmige Materialablagerung (260), die sich in der Schicht befindet, die auf die Schicht folgt, die die erste linienförmige Ablagerung (260) enthält, auf der ersten linienförmigen Ablagerung (260), die einen zweiten Abschnitt der Umfangswand des Fluidkanals (110) in der Strömungsvorrichtung (100) bildet;
wobei die zweite linienförmige Materialablagerung (260) seitlich versetzt von der ersten linienförmigen Materialablagerung (260) angeordnet ist und in den Fluidkanal (110) überhängt.

4. Vorrichtung nach einem vorangehenden Anspruch, wobei die vorbestimmten Befehle aus der Steuerung (20) das Anweisen der Vorrichtung (10) zur Abgabe von Folgendem einschließt:
eine erste linienförmige Materialablagerung (280), die einen Abschnitt einer Umfangswand eines ersten querlaufenden Fluidkanals 106) in der Strömungsvorrichtung (100) in mindestens einer der mehreren Materialschichten bildet; und
eine zweite linienförmige Materialablagerung (290), die an die erste Materialablagerung (280) in der mindestens einen der mehreren Materialschichten angrenzt und die einen Abschnitt einer Umfangswand eines zweiten Fluidkanals (104) in fluidleitender Verbindung mit dem ersten querlaufenden Fluidkanal (106) und im Wesentlichen senkrecht dazu bildet; und
wobei sich die erste linienförmige Ablagerung (280) und die zweite linienförmige Ablagerung (290) an der Schnittstelle (296) der ersten und zweiten linienförmigen Materialablagerung (280; 290) überlappen.

5. Vorrichtung nach einem vorangehenden Anspruch, wobei die vorbestimmten Befehle aus der Steuerung (20) das Anweisen der Vorrichtung (10) zur Abgabe von Folgendem einschließen:
eine erste linienförmige Materialablagerung (260), die eine Seitenwand eines Fluidkanals (110) in der Strömungsvorrichtung (100) in mindestens einer der mehreren Materialschichten bildet;
eine zweite linienförmige Materialablagerung (270), die sich in der Schicht befindet, die auf die Schicht folgt, die die erste Ablagerung (260) enthält, auf der ersten Ablagerung (260), die eine obere Wand des Fluidkanals (110) in der Strömungsvorrichtung (100) bildet, wobei sich die zweite linienförmige Materialablagerung (270) quer über die Breite des Fluidkanals (110) erstreckt;
eine dritte linienförmige Materialablagerung (274), die sich in der gleichen Schicht wie die Schicht befindet, die die zweite linienförmige Materialablagerung (270) enthält, wobei die dritte linienförmige Materialablagerung (274) benachbart zur zweiten linienförmigen Materialablagerung (270) ist; und
eine vierte linienförmige Materialablagerung (280), die sich in der Schicht befindet, die auf die Schicht folgt, die die zweite und dritte Ablagerung (270; 274) enthält, auf der oberen Wand;
wobei sich die ersten, dritten und vierten Ablagerungen (260; 274; 280) in einer Richtung parallel zur Länge des Fluidkanals (110) erstrecken.

6. Verfahren zum Herstellen einer dreidimensionalen Strömungsvorrichtung (100), die mindestens einen Fluidkanal (110) enthält, unter Verwendung einer Vorrichtung (10), die Folgendes umfasst:
einen Spenderkopf (14), der einen Durchgang zur Aufnahme einer Materialzufuhr und eine Abgabeöffnung (24) an einem Ende des Durchgangs umfasst;
ein Basiselement (16) zur Aufnahme des aus der Öffnung (24) des Spenderkopfs (14) abgegebenen Materials;
eine Betätigungsmittel (18) zum Bewegen des Spenderkopfes (14) in Bezug auf das Basiselement (16); und
eine Steuerung (20) zum Senden eines Satzes von vorbestimmten Befehlen an jeweils das Betätigungsmittel (18) und den Spenderkopf (14);
wobei das Verfahren das Ablagern einer Reihe von aufeinanderfolgenden Materialschichten aus dem Spenderkopf (14) auf dem Basiselement (16), wobei jede Schicht aus einer Reihe von nebeneinanderliegenden linienförmigen Materialablagerungen gebildet wird, auf Basis der vorbestimmten Befehle, die aus der Steuerung (20) an das Betätigungsmittel (18) und den Spenderkopf (14) gesendet werden, umfasst,
wobei das Verfahren auch das Überlappen der linienförmigen Ablagerungen umfasst, um Leckpfade zwischen den linienförmigen Ablagerungen zu reduzieren, um die Dichtungseigenschaften des mindestens einen Fluidkanals (110) in der Strömungsvorrichtung (100) zu verbessern;
wobei das Verfahren **dadurch gekennzeichnet ist, dass** die Vorrichtung Folgendes abgibt:
eine Vielzahl von Materialablagerungen (250), die den unteren Abschnitt der Umfangswand eines Fluidkanals (110) in der Strömungsvorrichtung (100) in mindestens einer der Materialschichten bilden;
wobei die Vielzahl von Materialablagerungen (250) im Wesentlichen parallel zur Richtung des Fluidstroms entlang des Fluidkanals (110) ist, wenn der Fluidkanal (110) in Gebrauch ist.

7. Dreidimensionale Strömungsvorrichtung, hergestellt unter Verwendung des Verfahrens nach Anspruch 6.

## Revendications

1. Appareil (10) de création d'un dispositif fluidique tridimensionnel (100) contenant au moins un canal de fluide (110), l'appareil (10) comprenant :
une tête de distribution (14) comprenant un passage pour recevoir une alimentation en matériau, et comprenant un orifice de distribution (24) à une extrémité du passage ;
un élément de base (16) pour recevoir le matériau distribué à partir de l'orifice (24) de la tête de distribution (14) ;
un moyen d'actionnement (18) pour déplacer la tête de distribution (14) par rapport à l'élément de base (16) ; et
un dispositif de commande (20) pour envoyer un ensemble d'instructions prédéterminées à chacune du moyen d'actionnement (18) et de la tête de distribution (14) ;
dans lequel l'appareil (10) peut fonctionner pour créer le dispositif fluidique en déposant une série de couches successives de matériau à partir de la tête de distribution (14) sur l'élément de base (16), chaque couche étant formée d'une série de dépôts linéaires adjacents de matériau, sur la base des instructions prédéterminées envoyées par le dispositif de commande (20) au moyen d'actionnement (18) et à la tête de distribution (14),
dans lequel l'appareil (10) peut fonctionner pour permettre le chevauchement des dépôts linéaires afin de réduire les chemins de fuite entre les dépôts linéaires pour améliorer les propriétés d'étanchéité de l'au moins un canal de fluide (110) dans le dispositif fluidique (100) ;
**caractérisé en ce que** les instructions prédéterminées provenant du dispositif de commande (20) incluent le fait d'ordonner à l'appareil de distribuer :
une pluralité de dépôts de matériau (250) formant la partie inférieure de la paroi périphérique d'un canal de fluide (110) dans le dispositif fluidique (100) dans au moins l'une des couches de matériau ;
dans lequel la pluralité de dépôts de matériau (250) sont sensiblement parallèles à la direction d'écoulement de fluide le long du canal de fluide (110) lorsque le canal de fluide (110) est en cours d'utilisation.

2. Appareil selon la revendication 1, dans lequel les instructions prédéterminées provenant du dispositif de commande (20) incluent le fait d'ordonner à l'appareil (10) :
de distribuer une boucle fermée de matériau (202c-202e) formant une partie de la paroi périphérique d'un canal de fluide dans le dispositif fluidique (100) dans au moins l'une des couches de matériau, où les deux extrémités (206' ; 208') de la boucle fermée de matériau (202c-202e) se chevauchent.

3. Appareil selon l'une des revendications précédentes, dans lequel les instructions prédéterminées provenant du dispositif de commande (20) incluent le fait d'ordonner à l'appareil (10) de distribuer :
un premier dépôt linéaire de matériau (260) ayant un premier pas formant une première partie d'une paroi périphérique d'un canal de fluide (110) dans le dispositif fluidique (100) dans au moins l'une des couches de matériau ; et
un deuxième dépôt linéaire de matériau (260), qui est situé dans la couche successive à la couche contenant le premier dépôt linéaire (260), sur le premier dépôt linéaire (260) formant une deuxième partie de la paroi périphérique du canal de fluide (110) dans le dispositif fluidique (100) ;
dans lequel le deuxième dépôt linéaire de matériau (260) est décalé latéralement par rapport au premier dépôt linéaire de matériau (260) et est en surplomb dans le canal de fluide (110).

4. Appareil selon l'une des revendications précédentes, dans lequel les instructions prédéterminées provenant du dispositif de commande (20) incluent le fait d'ordonner à l'appareil (10) de distribuer :
un premier dépôt linéaire de matériau (280) formant une partie d'une paroi périphérique d'un premier canal de fluide transversal (106) dans le dispositif fluidique (100) dans au moins l'une des multiples couches de matériau ; et
un deuxième dépôt linéaire de matériau (290) qui est voisin du premier dépôt de matériau (280) dans au moins l'une des multiples couches de matériau, et qui forme une partie d'une paroi périphérique d'un deuxième canal de fluide (104) qui en communication fluidique avec le premier canal de fluide transversal (106) et sensiblement perpendiculaire à celui-ci ; et
dans lequel le premier dépôt linéaire (280) et le deuxième dépôt linéaire (290) se chevauchent à l'interface (296) des premier et deuxième dépôts linéaires de matériau (280 ; 290).

5. Appareil selon l'une des revendications précédentes, dans lequel les instructions prédéterminées provenant du dispositif de commande (20) incluent le fait d'ordonner à l'appareil (10) de distribuer :
un premier dépôt linéaire de matériau (260) formant une paroi latérale d'un canal de fluide (110) dans le dispositif fluidique (100) dans au moins l'une des multiples couches de matériau ;
un deuxième dépôt linéaire de matériau (270), qui est situé dans la couche successive à la couche contenant le premier dépôt (260), sur le premier dépôt (260) formant une paroi supérieure du canal de fluide (110) dans le dispositif fluidique (100), où le deuxième dépôt linéaire de matériau (270) s'étend transversalement sur la largeur du canal de fluide (110) ;
un troisième dépôt linéaire de matériau (274), qui est situé dans la même couche que la couche contenant le deuxième dépôt linéaire de matériau (270), où le troisième dépôt linéaire de matériau (274) est adjacent au deuxième dépôt linéaire de matériau (270) ; et
un quatrième dépôt linéaire de matériau (280), qui est situé dans la couche successive à la couche contenant les deuxième et troisième dépôts (270 ; 274), sur la paroi supérieure ;
dans lequel les premier, troisième et quatrième dépôts (260 ; 274 ; 280) s'étendent dans une direction parallèle à la longueur du canal de fluide (110).

6. Procédé de création d'un dispositif fluidique tridimensionnel (100) contenant au moins un canal de fluide (110) en utilisant un appareil (10) comprenant :
une tête de distribution (14) comprenant un passage pour recevoir une alimentation en matériau, et comprenant un orifice de distribution (24) à une extrémité du passage ;
un élément de base (16) pour recevoir le matériau distribué à partir de l'orifice (24) de la tête de distribution (14) ;
un moyen d'actionnement (18) pour déplacer la tête de distribution (14) par rapport à l'élément de base (16) ; et
un dispositif de commande (20) pour envoyer un ensemble d'instructions prédéterminées à chacun(e) du moyen d'actionnement (18) et de la tête de distribution (14) ;
dans lequel le procédé comprend le dépôt d'une série de couches successives de matériau à partir de la tête de distribution (14) sur l'élément de base (16), chaque couche étant formée d'une série de dépôts linéaires adjacents de matériau, sur la base des instructions prédéterminées envoyées par le dispositif de commande (20) au moyen d'actionnement (18) et à la tête de distribution (14),
dans lequel le procédé comprend également le chevauchement des dépôts linéaires afin de réduire les chemins de fuite entre les dépôts linéaires pour améliorer les propriétés d'étanchéité de l'au moins un canal de fluide (110) dans le dispositif fluidique (100) ;
dans lequel le procédé est **caractérisé en ce que** l'appareil (10) distribue :
une pluralité de dépôts de matériau (250) formant la partie inférieure de la paroi périphérique d'un canal de fluide (110) dans le dispositif fluidique (100) dans au moins l'une des couches de matériau ;
dans lequel la pluralité de dépôts de matériau (250) sont sensiblement parallèles à la direction d'écoulement de fluide le long du canal de fluide (110) lorsque le canal de fluide (110) est en cours d'utilisation.

7. Dispositif fluidique tridimensionnel fabriqué à l'aide du procédé selon la revendication 6.
